# EUROPEAN PATENT APPLICATION

(11) **EP 4 696 810 A1**
(43) Date of publication of application: **18.02.2026**
(21) Application number: 24788841.5
(22) Date of filing: 12.04.2024
(51) Int. Cl.: C23C 22/00, C21D 8/12, C21D 9/46, C22C 38/00, C22C 38/06, C22C 38/60, H01F 1/147

(54) **GRAIN-ORIENTED ELECTROMAGNETIC STEEL SHEET AND METHOD FOR FORMING INSULATING COATING**

(30) Priority: 13.04.2023 JP 2023065385
(71) Applicant: NIPPON STEEL CORPORATION, Tokyo 100-8071 (JP)
(72) Inventor: TAKEDA Kazutoshi, Tokyo 100-8071 (JP); TAKATANI Shinsuke, Tokyo 100-8071 (JP); KATAOKA Takashi, Tokyo 100-8071 (JP); KOGAKURA Yuuki, Tokyo 100-8071 (JP)
(74) Representative: Vossius & Partner Patentanwälte Rechtsanwälte mbB
(86) International application number: PCT/JP2024/014842
(87) International publication number: WO 2024/214819

(57) **Abstract**

This grain-oriented electrical steel sheet is a grain-oriented electrical steel sheet including a base steel sheet and an insulating coating formed on a surface of the base steel sheet, in which the base steel sheet includes a flat surface part and a groove part extending in a direction of 45 to 135° with respect to a rolling direction, the groove part has a depth of 10 to 30 µm and a width of 10 to 200 µm, the insulating coating includes an intermediate layer formed on a side of the base steel sheet, containing a crystalline metal phosphate, and having a thickness of 0.1 to 15.0 µm, and a tension coating layer formed on a surface side of the insulating coating, and the base steel sheet is covered with the insulating coating including the tension coating layer and the intermediate layer having a thickness of 0.1 to 9.0 µm in 50% or more of the groove part in terms of area ratio.

## Description

### TECHNICAL FIELD

The present invention relates to a grain-oriented electrical steel sheet and a method for forming an insulating coating included in the grain-oriented electrical steel sheet.

Priority is claimed on Japanese Patent Application No. 2023-065385, filed April 13, 2023, the content of which is incorporated herein by reference.

### BACKGROUND ART

A grain-oriented electrical steel sheet is mainly used for a transformer. The transformer is continuously magnetized for a long period of time from installation to disposal and continues to generate energy loss. Therefore, energy loss when the transformer is magnetized by alternating current, that is, iron loss is a main index for determining the performance of the transformer.

In order to reduce iron loss of the grain-oriented electrical steel sheet, many techniques have been developed so far from the viewpoint of (a) increasing development in the {110} <001> orientation (Goss orientation), (b) increasing the content of a solid solution element such as Si to increase electric resistance of the steel sheet, or (c) reducing the sheet thickness of the electrical steel sheet.

In addition, applying tension to the steel sheet is effective for reducing iron loss. It is an effective means for reducing iron loss to form a coating made of a material having a thermal expansion coefficient smaller than that of the steel sheet on a sheet surface at a high temperature. A forsterite film (inorganic coating) having excellent coating adhesion, generated by a reaction between an oxide on a sheet surface and an annealing separator in a finishing annealing step of an electrical steel sheet is a coating capable of applying tension to the steel sheet.

For example, a method for forming an insulating coating by baking a coating liquid mainly containing colloidal silica and a phosphate on a sheet surface, disclosed in Patent Document 1, is an effective method for reducing iron loss because the method is highly effective at applying tension to the steel sheet. Therefore, a general method for manufacturing a grain-oriented electrical steel sheet is to leave the forsterite film generated in the finishing annealing step and to form an insulating coating mainly containing a phosphate on the forsterite film.

However, in recent years, there has been an increasing demand for miniaturization and high performance of a transformer, and in order to miniaturize the transformer, a grain-oriented electrical steel sheet is required to have excellent high magnetic field iron loss such that iron loss is favorable even when magnetic flux density is high. At the same time, in recent years, it has been clarified that a forsterite film hinders movement of a magnetic domain wall and adversely affects iron loss. In a grain-oriented electrical steel sheet, a magnetic domain changes by movement of a magnetic domain wall under an alternating magnetic field. The smooth and rapid movement of the magnetic domain wall is effective for reducing iron loss, but the forsterite film itself is a non-magnetic body and has an uneven structure at the interface between the steel sheet and the coating, and it is considered that this uneven structure hinders the movement of the magnetic domain wall and thus adversely affects iron loss.

Therefore, as a means for improving high magnetic field iron loss, a technique for manufacturing a grain-oriented electrical steel sheet having no forsterite film, or a technique for bringing a sheet surface into a mirror surface state (in other words, a technique for magnetically smoothing a sheet surface) by: removing a forsterite film using a mechanical means such as polishing or a chemical means such as pickling; or preventing generation of a forsterite film in high-temperature finishing annealing, have been studied.

As a technique for preventing the generation of a forsterite film, for example, Patent Document 2 discloses a technique in which a surface-formed product is removed through pickling after normal finishing annealing and then a sheet surface is brought into a mirror surface state through chemical polishing or electrolytic polishing. It has been found that a better iron loss-improving effect can be obtained by forming a tension-applying insulating coating on the surface of a grain-oriented electrical steel sheet having no forsterite film, obtained using such a known method. In addition, the tension-applying insulating coating can impart various characteristics such as corrosion resistance, heat resistance, and slippage in addition to improvement of iron loss.

However, the forsterite film has an effect of exhibiting an insulation property and an effect as an intermediate layer for securing adhesion when a tension coating (tension-applying insulating coating) is formed. That is, since the forsterite film is formed in a state of deeply entering the steel sheet, the forsterite film has excellent adhesion to the steel sheet which is metal. Therefore, when a tension-applying type coating (tension coating) mainly containing colloidal silica, phosphate, or the like as a main component is formed on the surface of the forsterite film, the coating adhesion is excellent. On the other hand, since it is generally difficult to bond a metal and an oxide, it is difficult to ensure sufficient adhesion between a tension coating and a sheet surface when a forsterite film is not present.

Thus, in the case of forming a tension coating on a grain-oriented electrical steel sheet having no forsterite film, provision of a layer that substitutes for a role as an intermediate layer of a forsterite film has been studied.

Patent Document 3 discloses a technique for ensuring adhesion of a tension-applying insulating coating by forming a coating that serves as an intermediate layer in advance when a tension-applying coating is formed.

However, the technique disclosed in Patent Document 3 has a problem in that a tension-applying insulating coating having a large tension cannot be held with good adhesion.

Further, for example, Patent Document 4 discloses a grain-oriented electrical steel sheet including a base steel sheet and an insulating coating formed on a surface of the base steel sheet, in which the insulating coating includes an intermediate layer formed on a side of the base steel sheet and containing a crystalline metal phosphate and a tension coating layer formed on a surface side of the insulating coating. Patent Document 4 shows that a grain-oriented electrical steel sheet does not have a forsterite film, has excellent coating adhesion, excellent coating tension, and excellent magnetic characteristics.

On the other hand, in order to improve magnetic characteristics of a grain-oriented electrical steel sheet, a so-called magnetic domain refinement technique is known in which a magnetic domain width present in a steel sheet is reduced. As a magnetic domain control method, as disclosed in Patent Document 5, a method is known in which a surface of a grain-oriented electrical steel sheet after finishing annealing is irradiated with a laser beam to refine a magnetic domain to reduce eddy-current loss, and as a result, iron loss is reduced. However, this method utilizes a magnetic domain refinement phenomenon mainly caused by thermal strain introduced into the steel sheet by laser irradiation. A wound core often mainly used for a medium-to-small transformer is often manufactured according to a core manufacturing method using mechanical bending, and in this manufacturing method, in order to eliminate an increase in iron loss due to processing strain introduced into a steel sheet due to bending, a core shape is manufactured by machining, and then stress relief annealing (for example, about 2 to 4 hours at 800°C) is generally performed. Although the strain due to machining, introduced into the core by such stress relief annealing, is reduced or eliminated, the thermal strain introduced for the magnetic domain refinement in the steel sheet subjected to the magnetic domain control through laser irradiation is eliminated. Thus, it is generally considered that a grain-oriented electrical steel sheet subjected to magnetic domain refinement through introduction of thermal strain typified by laser irradiation cannot be applied to a wound core.

As a magnetic domain control technique in which a magnetic domain control effect is not lost even when the above-described stress relief annealing is performed, a "groove introduction type magnetic domain control technique" in which linear grooves are periodically formed in a direction intersecting a rolling direction is widely known. Assuming application to a wound core, it is necessary to assume application of a groove introduction type magnetic domain control technique.

Here, in the technique disclosed in Patent Document 4, it is possible to obtain a grain-oriented electrical steel sheet which does not have an inorganic coating, has excellent coating adhesion, excellent coating tension, and excellent magnetic characteristics. However, in Patent Document 4, stress relief annealing and formation of grooves are not sufficiently considered.

As a result of examination by the present inventors, it has been found that in the method disclosed in Patent Document 4, when a groove is formed, the adhesion of the insulating coating in the groove part is not sufficient, and as a result, a sufficient effect of improving the magnetic characteristics and corrosion resistance after stress relief annealing is not necessarily obtained.

### Citation List

### Patent Documents

Patent Document 1: Japanese Unexamined Patent Application, First Publication No. S48-039338
Patent Document 2: Japanese Unexamined Patent Application, First Publication No. S49-96920
Patent Document 3: Japanese Unexamined Patent Application, First Publication No. H05-279747
Patent Document 4: PCT International Publication No. WO 2022/215709
Patent Document 5: Japanese Unexamined Patent Application, First Publication No. S56-51522

### SUMMARY OF INVENTION

### Technical Problem

As described above, conventionally, in a grain-oriented electrical steel sheet in which a groove is formed in a base steel sheet, it is not easy to simultaneously improve coating adhesion and magnetic characteristics without providing a forsterite film.

Therefore, an object of the present invention is to provide a grain-oriented electrical steel sheet in which a groove is formed in a base steel sheet, the grain-oriented electrical steel sheet not having a forsterite film and having excellent coating adhesion and magnetic characteristics. Another object of the present invention is to provide a method for forming an insulating coating included in the grain-oriented electrical steel sheet. However, even if the coating adhesion is improved, it is not practically preferable that the coating tension, the corrosion resistance, and the dissolution property are lowered, and thus it is assumed that these characteristics do not deteriorate.

### Solution to Problem

The present inventors have found that, in a grain-oriented electrical steel sheet in which a groove is formed in a base steel sheet, adhesion of the base steel sheet to an insulating coating is improved even in a groove part by forming a coating on a surface of the base steel sheet under a specific treatment condition after forming the groove.

The present invention has been made in view of the above findings. The gist of the present invention is as follows.
[1] A grain-oriented electrical steel sheet according to an aspect of the present invention is a grain-oriented electrical steel sheet including a base steel sheet and an insulating coating formed on a surface of the base steel sheet, in which the base steel sheet includes a flat surface part, and a groove part extending in a direction of 45 to 135° with respect to a rolling direction, the groove part has a depth of 10 to 30 µm and a width of 10 to 200 µm, the insulating coating includes an intermediate layer formed on a side of the base steel sheet, containing a crystalline metal phosphate, and having a thickness of 0.1 to 15.0 µm, and a tension coating layer formed on a surface side of the insulating coating, and the base steel sheet is covered with the insulating coating including the tension coating layer and the intermediate layer having a thickness of 0.1 to 9.0 µm in 50% or more of the groove part in terms of area ratio.
[2] In the grain-oriented electrical steel sheet according to [1], the crystalline metal phosphate contained in the intermediate layer may be one or two or more of zinc phosphate, manganese phosphate, iron phosphate, and zinc calcium phosphate, and the tension coating layer may contain a metal phosphate and silica, and the content of silica in the tension coating layer may be 20 to 60 mass%.
[3] A method for forming an insulating coating according to another aspect of the present invention is a method for forming the insulating coating included in the grain-oriented electrical steel sheet according to [1], the method including: a finishing annealing step of applying an annealing separator containing 10 to 100 mass% of Al₂O₃ to a steel sheet, drying the annealing separator, and then performing finishing annealing; an annealing separator removal step of removing the excess of the annealing separator from the steel sheet after the finishing annealing step; a groove-forming step of forming a groove part extending in a direction of 45 to 135° with respect to a rolling direction on the steel sheet before the finishing annealing step or after the annealing separator removal step by processing using a blade-like or a laser; an intermediate layer-forming step of immersing the steel sheet, which has undergone the annealing separator removal step and the groove-forming step, for 5 seconds to 90 seconds in a mixed treatment liquid at a liquid temperature of 30 to 85°C, where the mixed treatment liquid contains a metal phosphate having a concentration of 1.0 to 15.0 mass%, one or two or more acids selected from hydrofluoric acid, nitric acid, and phosphoric acid having a total concentration of 0.01 to 10.0 mass%, and sodium hydroxide, sodium carbonate, or sodium phosphate having a concentration of 0.01 to 1.50 mass%, washing and removing the mixed treatment liquid with water, and then drying the steel sheet; and a tension coating layer-forming step of applying, to the steel sheet after the intermediate layer-forming step, a coating liquid containing a metal phosphate and colloidal silica such that the colloidal silica is contained in an amount of 30 to 150 parts by mass with respect to 100 parts by mass of the metal phosphate, drying the coating liquid, and then holding the steel sheet at a sheet temperature of 700 to 950°C for 10 to 90 seconds.
[4] In the method for forming the insulating coating according to [3], the annealing separator may further contain one or both of 5 to 90 mass% of MgO and 0.5 to 10.0 mass% of chloride.

### Advantageous Effects of Invention

According to the above aspects of the present invention, it is possible to provide a grain-oriented electrical steel sheet having excellent coating adhesion and magnetic characteristics, and a method for forming an insulating coating included in the grain-oriented electrical steel sheet.

### BRIEF DESCRIPTION OF DRAWINGS

[FIG. 1] A diagram illustrating a schematic diagram of a grain-oriented electrical steel sheet according to the present embodiment.
[FIG. 2] A schematic view of a cross section taken along line A-A in FIG. 1, and is a view illustrating a groove part.

### DESCRIPTION OF EMBODIMENTS

A grain-oriented electrical steel sheet according to an embodiment of the present invention (grain-oriented electrical steel sheet according to the present embodiment) and a method for manufacturing the same will be described.

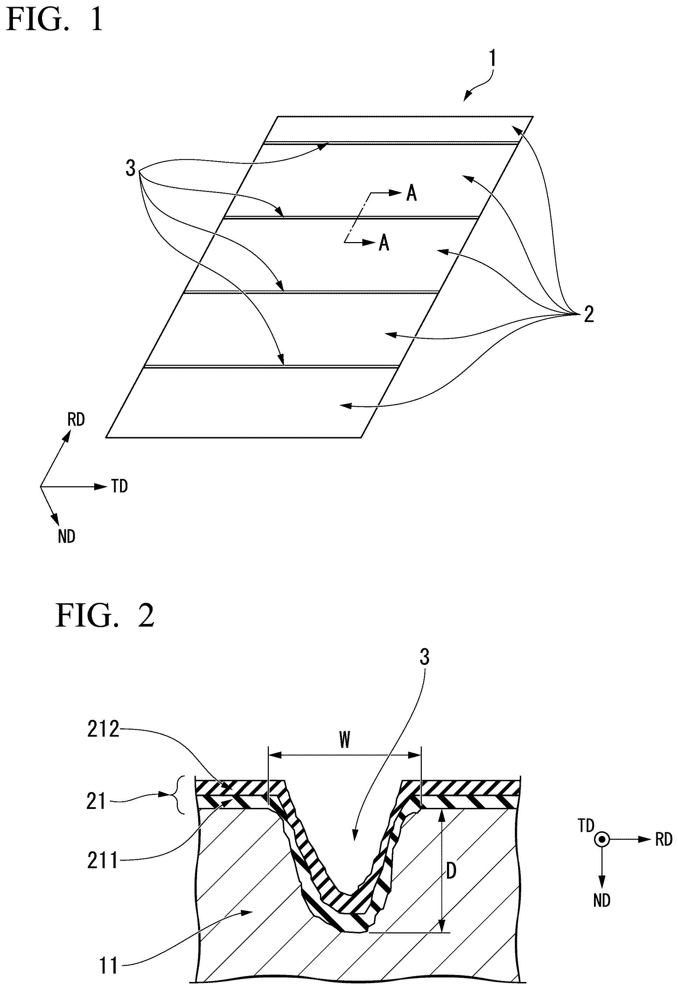

As illustrated in FIGS. 1 and 2, a grain-oriented electrical steel sheet 1 according to the present embodiment includes a base steel sheet 11 and an insulating coating 21 formed on a surface of the base steel sheet 11, and has substantially no forsterite film (also referred to as a glass coating) on the surface of the base steel sheet 11 (the forsterite film is not formed intentionally, even if it is unintentionally formed and remains, and an amount thereof is 0.5 g/m² or less).

In the grain-oriented electrical steel sheet 1 according to the present embodiment, the base steel sheet 11 has a flat surface part 2 and a groove part 3 extending in a direction of 45 to 135° with respect to a rolling direction RD. In addition, 50 area% or more of the groove part 3 is covered with the insulating coating 21.

The insulating coating 21 includes an intermediate layer 211 formed on the base steel sheet 11 side and a tension coating layer 212 formed on the surface side.

Hereinafter, both the above cases will be described.

### <Insulating Coating>

The insulating coating 21 has the intermediate layer 211 formed on the base steel sheet side, containing a crystalline metal phosphate, and having a thickness of 0.1 to 15.0 µm, and the tension coating layer 212 formed on the surface side.

### [Intermediate Layer]

The intermediate layer is a layer (coating) formed on the base steel sheet side of the insulating coating, contains a crystalline metal phosphate, and has a thickness of 0.1 to 15.0 µm. However, as will be described later, in the groove part, the thickness of the intermediate layer is 0.1 to 9.0 µm.

As described above, in general, a grain-oriented electrical steel sheet has an inorganic coating (forsterite film) produced in a finishing annealing step and an insulating coating (tension insulating coating) formed thereon. However, in recent years, it has been clarified that the forsterite film hinders movement of a magnetic domain wall and adversely affects iron loss, and thus, in order to further improve magnetic characteristics, a grain-oriented electrical steel sheet having no forsterite film has been studied. However, in the case where there is no forsterite film, it is difficult to ensure sufficient adhesion between the tension coating layer and the surface of the base steel sheet.

In the grain-oriented electrical steel sheet 1 according to the present embodiment, the intermediate layer 211 containing a crystalline metal phosphate is formed between the base steel sheet 11 and the tension coating layer 212 to improve adhesion between the base steel sheet 11 and the tension coating layer 212 via the intermediate layer 211.

When the intermediate layer 211 contains a crystalline metal phosphate, a tension coating (which becomes the tension coating layer 212 after formation) formed thereon also contains a metal phosphate, and thus affinity is high and adhesion between the intermediate layer 211 and the tension coating layer 212 is excellent. In addition, as will be described later, in the case where the intermediate layer 211 is formed through immersion in a treatment liquid containing a metal phosphate, the intermediate layer 211 can be formed on a surface of the base steel sheet 11 using a chemical reaction, and adhesion between the intermediate layer 211 and the base steel sheet 11 can also be ensured.

When the intermediate layer 211 does not contain a crystalline metal phosphate, the above effect cannot be obtained.

The percentage of the crystalline metal phosphate in the intermediate layer is preferably 80 mass% or more, and may be 100 mass%. The metal phosphate is preferably one or two or more of zinc phosphate, manganese phosphate, iron phosphate, and zinc calcium phosphate from the viewpoint of adhesion.

The metal phosphate is preferably not a hydrate because corrosion resistance is reduced when the metal phosphate is a hydrate. Even in the grain-oriented electrical steel sheet according to the present embodiment, a hydrate inevitably generated in the process of forming the intermediate layer may finally remain, but the amount of the hydrate is small (usually less than 5.0 mass% of the entire insulating coating 21).

The intermediate layer 211 may contain, as the remainder of the metal phosphate, an oxide or an element diffused from the base steel sheet, such as Fe or Si.

The intermediate layer 211 is formed at a timing different from that of the tension coating formed thereon, but both the intermediate layer 211 and the tension coating layer 212 exhibit an effect as the insulating coating 21.

The amount of the hydrate in the metal phosphate can be roughly obtained by measuring the amount of water according to a themogravimetry.

When the average thickness of the intermediate layer 211 is less than 0.1 µm, the effect of improving adhesion between the base steel sheet and the insulating coating via the intermediate layer is not sufficient. On the other hand, when the average thickness of the intermediate layer is more than 15.0 µm, deterioration in magnetic characteristics is significant. The thickness here is the thickness of the base steel sheet 11 in the flat surface part 2. The thickness in the groove part 3 is 0.1 to 9.0 µm. In the groove part 3, when the thickness of the intermediate layer 211 is more than 9.0 µm, the adhesion is poor.

### [Tension Coating Layer]

In the grain-oriented electrical steel sheet 1 according to the present embodiment, the tension coating layer 212 is provided on the side to be the surface of the insulating coating 21 by forming the tension coating on the surface of the intermediate layer 211.

The tension coating layer 212 is not particularly limited as long as it is used as an insulating coating of a grain-oriented electrical steel sheet, but preferably contains a metal phosphate and silica (derived from colloidal silica of a coating liquid) such that the content of silica is 20 mass% or more from the viewpoint of adhesion to the intermediate layer 211 (adhesion to the base steel sheet 11 via the intermediate layer 211). On the other hand, when the silica content of the tension coating layer 212 is more than 60 mass%, it causes powdering, and thus it is preferable that the silica content be 60 mass% or less.

The tension coating layer 212 preferably contains a metal phosphate and silica in a total amount of 70 mass% or more. As the remainder other than the metal phosphate and silica, alumina or ceramic fine particles such as silicon nitride may be contained.

The thickness of the tension coating layer 212 is not limited, but the average thickness of the insulating coating 21 (the intermediate layer 211 + the tension coating layer 212) is preferably 1.0 to 20.0 µm in both the flat surface part and the groove part. When the average thickness of the insulating coating 21 is less than 1.0 µm, a sufficient coating tension cannot be obtained. In addition, dissolution of phosphoric acid increases. In this case, this may cause stickiness and corrosion resistance deterioration, and may cause coating peeling. On the other hand, when the thickness of the insulating coating 21 is more than 20.0 µm, a space factor decreases, so that magnetic characteristics deteriorate, or adhesion decreases or corrosion resistance decreases due to cracks or the like.

The thickness of the intermediate layer 211, the thickness of the tension coating layer 212, and the thickness of the insulating coating are obtained using the following method.

In the flat surface part, a cross section of a sample is observed with a scanning electron microscope, and the thicknesses of five or more points are measured and averaged, whereby the average thickness of each can be measured. In the insulating coating 21, the thicknesses of the intermediate layer 211 and the tension coating layer 212 can be determined from a detection amount of silicon derived from silica (the tension coating layer contains silica as described above, and the content thereof is 10 mass% or more).

The sum of the average thickness of the intermediate layer 211 and the average thickness of the tension coating layer 212 is the average thickness of the insulating coating 21.

In the groove part, bottom portions of the groove are measured at five points, and the average thickness is measured by averaging over the positions.

In the intermediate layer 211 and the tension coating layer 212, the mass percentage of the metal phosphate and the type of the metal phosphate can be obtained using the following method.

Similarly to the method for measuring the thicknesses of the intermediate layer 211 and the tension coating layer 212, it is possible to specify the mass percentage of the metal phosphate and the type of the metal phosphate using a scanning electron microscope and an energy dispersive element analyzer.

Whether the metal phosphate of the intermediate layer 211 is a crystalline metal phosphate can be determined by X-ray crystallography.

The silica content in the tension coating layer 212 can be measured using a scanning electron microscope and an energy dispersive elemental analyzer.

### <Base Steel Sheet>

### [Chemical Composition]

The grain-oriented electrical steel sheet 1 according to the present embodiment has a great feature in terms of the structure of the insulating coating 21 formed on the surface of the base steel sheet 11, and the base steel sheet 11 included in the grain-oriented electrical steel sheet 1 is not limited in terms of its chemical composition. However, in order to obtain characteristics generally required for a grain-oriented electrical steel sheet, it is preferable to include the following components as chemical components constituting the chemical composition. In the present embodiment, % relating to the chemical composition is mass% unless otherwise specified.

### C: 0.010% or less

C (carbon) is an effective element for controlling the microstructure of the steel sheet in steps up to completion of the decarburization annealing step in the manufacturing process. However, when the C content exceeds 0.010%, the magnetic characteristics of the produced grain-oriented electrical steel sheet deteriorate. Therefore, in the base steel sheet of the grain-oriented electrical steel sheet according to the present embodiment, the C content is preferably 0.010% or less. The C content is more preferably 0.005% or less. The C content is preferably as low as possible, but even when the C content is reduced to less than 0.0001%, a microstructure control effect is saturated, and manufacturing cost is merely increased. Therefore, the C content may be 0.0001% or more.

### Si: 2.50 to 4.00%

Si (silicon) is an element that increases the electric resistance of a grain-oriented electrical steel sheet and improves iron loss characteristics. When the Si content is less than 2.50%, a sufficient eddy-current loss reducing effect cannot be obtained. Therefore, the Si content is preferably 2.50% or more. The Si content is more preferably 2.70% or more, and still more preferably 3.00% or more.

On the other hand, when the Si content exceeds 4.00%, the grain-oriented electrical steel sheet is embrittled, and passability significantly deteriorates. In addition, workability of the grain-oriented electrical steel sheet deteriorates, and the steel sheet may be fractured during rolling. Therefore, the Si content is preferably set to 4.00% or less. The Si content is more preferably 3.80% or less, and still more preferably 3.70% or less.

### Mn: 0.01 to 0.50%

Mn (manganese) is an element that is bonded to S in a manufacturing process to form MnS. This precipitate functions as an inhibitor (inhibitor of normal grain growth) and causes secondary recrystallization in steel. Mn is also an element that enhances hot workability of steel. When the Mn content is less than 0.01%, the above effect cannot be sufficiently obtained. Therefore, the Mn content is preferably 0.01% or more. The Mn content is more preferably 0.02% or more.

On the other hand, when the Mn content exceeds 0.50%, secondary recrystallization does not occur, and the magnetic characteristics of steel deteriorate. Therefore, in the base steel sheet of the grain-oriented electrical steel sheet according to the embodiment, the Mn content is preferably 0.50% or less. The Mn content is more preferably 0.20% or less, and still more preferably 0.10% or less.

### N: 0.010% or less

N (nitrogen) is an element that is bonded to Al in the manufacturing process to form AlN that functions as an inhibitor. However, when the N content exceeds 0.010%, the inhibitor excessively remains in the base steel sheet of the grain-oriented electrical steel sheet, and the magnetic characteristics deteriorate. Therefore, in the base steel sheet of the grain-oriented electrical steel sheet according to the embodiment, the N content is preferably 0.010% or less. The N content is more preferably 0.008% or less.

On the other hand, the lower limit value of the N content is not particularly limited, but even when the N content is reduced to less than 0.001%, manufacturing cost is merely increased. Therefore, the N content may be 0.001% or more.

### Sol. Al: 0.020% or less

Sol. Al (acid-soluble aluminum) is an element that is bonded to N in the manufacturing process of the grain-oriented electrical steel sheet to form AlN that functions as an inhibitor. However, when the sol. Al content in the base steel sheet exceeds 0.020%, the inhibitor excessively remains in the base steel sheet, so that magnetic characteristics deteriorate. Therefore, in the base steel sheet of the grain-oriented electrical steel sheet according to the embodiment, the sol. Al content is preferably 0.020% or less. The sol. Al content is more preferably 0.010% or less, and still more preferably less than 0.001%. The lower limit value of the sol. Al content is not particularly limited, but even when the content is reduced to less than 0.0001%, manufacturing cost is merely increased. Therefore, the sol. Al content may be 0.0001% or more.

### S: 0.010% or less

S (sulfur) is an element that is bonded to Mn in the manufacturing process to form MnS that functions as an inhibitor. However, when the S content exceeds 0.010%, magnetic characteristics deteriorate due to the remaining inhibitor. Therefore, in the base steel sheet of the grain-oriented electrical steel sheet according to the present embodiment, the S content is preferably 0.010% or less. The S content in the grain-oriented electrical steel sheet is more preferably as low as possible. For example, the S content is less than 0.001%. However, even if the S content in the base steel sheet of the grain-oriented electrical steel sheet is reduced to less than 0.0001%, manufacturing cost is merely increased. Therefore, the S content in the base steel sheet of the grain-oriented electrical steel sheet may be 0.0001% or more.

### Remainder: Fe and impurities

The chemical composition of the base steel sheet of the grain-oriented electrical steel sheet according to the present embodiment may contain the above-described elements, with the remainder of Fe and impurities. However, the base steel sheet may further contain Sn, Cu, Se, and Sb in the following ranges for the purpose of improving magnetic characteristics and the like. In addition, for example, even when the base steel sheet contains one or more elements selected from W, Nb, Ti, Ni, Co, V, Cr, and Mo in a total amount of 1.0% or less as elements other than these elements, the effect of the grain-oriented electrical steel sheet according to the present embodiment is not impaired.

Here, the impurity is an element that is a contaminant derived from ore or scrap as a raw material, a manufacturing environment, or the like when the base steel sheet is industrially manufactured, and means an element that is allowed to be included at a content that does not adversely affect the effect of the grain-oriented electrical steel sheet according to the embodiment.

### Sn: 0 to 0.50%

Sn (tin) is an element that contributes to improvement in magnetic characteristics through primary recrystallization structure control. In order to obtain an effect of improving magnetic characteristics, the Sn content is preferably 0.01% or more. The Sn content is more preferably 0.02% or more, and still more preferably 0.03% or more.

On the other hand, when the Sn content exceeds 0.50%, secondary recrystallization is unstable, and magnetic characteristics deteriorate. Therefore, the Sn content is preferably 0.50% or less. The Sn content is more preferably 0.30% or less, and still more preferably 0.10% or less.

### Cu: 0 to 0.50%

Cu (copper) is an element that contributes to an increase in Goss orientation occupancy in a secondary recrystallization structure. In order to obtain the above effect, the Cu content is preferably 0.01% or more. The Cu content is more preferably 0.02% or more, and still more preferably 0.03% or more.

On the other hand, when the Cu content exceeds 0.50%, the steel sheet is embrittled during hot rolling. Therefore, in the base steel sheet of the grain-oriented electrical steel sheet according to the embodiment, the Cu content is preferably 0.50% or less. The Cu content is more preferably 0.30% or less, and still more preferably 0.10% or less.

### Se: 0 to 0.020%

Se (selenium) is an element having an effect of improving magnetic characteristics. When Se is contained, the Se content is preferably 0.001% or more such that Se favorably exhibits the effect of improving magnetic characteristics. The Se content is more preferably 0.003% or more, and still more preferably 0.006% or more.

On the other hand, when the Se content exceeds 0.020%, adhesion of a coating deteriorates. Therefore, the Se content is preferably 0.020% or less. The Se content is more preferably 0.015% or less, and still more preferably 0.010% or less.

### Sb:0 to 0.50%

Sb (antimony) is an element having an effect of improving magnetic characteristics. When Sb is contained, the Sb content is preferably 0.005% or more such that Sb favorably exhibits the effect of improving magnetic characteristics. The Sb content is more preferably 0.01% or more, and still more preferably 0.02% or more.

On the other hand, when the Sb content exceeds 0.50%, adhesion of a coating significantly deteriorates. Therefore, the Sb content is preferably 0.50% or less. The Sb content is more preferably 0.30% or less, and still more preferably 0.10% or less.

As described above, for example, the chemical composition of the base steel sheet of the grain-oriented electrical steel sheet according to the present embodiment contains the above-described elements, with the remainder of Fe and impurities.

The chemical composition of the base steel sheet of the grain-oriented electrical steel sheet according to the present embodiment can be measured using a known ICP emission spectrometry. Note that, at the time of measurement, in the case where an insulating coating is formed on a surface, the measurement is performed after the insulating coating is peeled off. As a peeling method, it is possible to peel off the insulating coating by immersing the base steel sheet with the insulating coating in a high-concentration alkaline solution (for example, a 30% sodium hydroxide solution heated to 85°C) for 20 minutes or more. It is possible to visually determine whether or not the insulating coating has been peeled off. In the case of a small sample, the insulating coating may be peeled off through surface grinding.

### [Groove Part]

The base steel sheet 11 has the flat surface part 2 and the groove part 3 on a rolled surface thereof. Magnetic domain control can be performed by periodically forming linear grooves (groove parts) in a direction intersecting the rolling direction.

In the base steel sheet 11 of the grain-oriented electrical steel sheet 1 according to the present embodiment, a depth D of the groove part 3 is 10 to 30 µm, and a width W of the groove part 3 is 10 to 200 µm.

When the depth D of the groove part 3 is less than 10 µm, the magnetic domain control effect becomes poor. On the other hand, when the depth D exceeds 30 µm, the decrease in the value of the magnetic flux density B8 becomes too large.

When the width W of the groove part 3 is 10 µm, the magnetic domain control effect becomes poor. On the other hand, when the width W exceeds 200 µm, the decrease in the value of the magnetic flux density B8 becomes too large.

In addition, it is preferable that a plurality of groove parts be present periodically in the rolling direction, and an interval between adjacent groove parts in the rolling direction be 1.0 to 20.0 mm. The interval between the groove parts is a distance from the center of the width of the groove part to the center of the width of the adjacent groove part.

A shape of the groove part is not limited, and for example, a cross section thereof has a substantially rectangular shape or a substantially triangular shape. In addition, the cross section may have an arch shape or the like configuring part of a circle.

In the present embodiment, the direction intersecting the rolling direction is a direction of 45 to 135° with respect to the rolling direction (90±45° with respect to the rolling direction). Since the magnetic domain control effect becomes greater as the angle becomes closer to 90° with respect to the rolling direction, the angle may be set to 70 to 110° with respect to the rolling direction.

In the grain-oriented electrical steel sheet according to the present embodiment, in the groove part 3, 50% or more of the area of the surface (side surface and bottom surface) is covered with the insulating coating 21 (the coverage is 50% or more). In the groove part, the thickness of the intermediate layer of the insulating coating is 0.1 to 9.0 µm.

When the coverage is less than 50%, adhesion of the tension coating after the stress relief annealing deteriorates, so that the tension coating is partially peeled off or has poor corrosion resistance.

In the grain-oriented electrical steel sheet according to the present embodiment, as will be described later, since the insulating coating is formed under specific treatment conditions, the adhesion of the insulating coating is high and the coverage is high even in the groove part.

The depth and the width of the groove part are obtained using the following method.

A steel sheet is cut into a few mm square to include the vicinity of a portion where a groove is visually determined to be formed, and ion milling (CP processing) is performed to remove micro shape defects such as sagging and cracks in a cross section, and then a cross section parallel to a rolling direction and a sheet thickness direction of the steel sheet is observed with a scanning electron microscope at a magnification of 1000 times, and one or a plurality of recessed parts formed at predetermined intervals are determined to be grooves. In the observed cross section, a portion having the longest (deepest) length of a perpendicular line vertically drawn from an extension line of the surface of the flat surface part (portion having no influence of grooving) of the base steel sheet in the recessed part is determined as the bottom of the groove, and a direct distance connecting one end portion and the other end portion of the recessed part on the extension line of the surface is determined as the width. Here, the end portion of the recessed part indicates a position where the recessed part starts to be recessed with a gradient of 30° or more with respect to the extension line of the surface of the flat surface part.

Three or more groove parts are observed as described above, and averages of respective measurement values are defined as the depth and the width of the groove part.

The coverage of the insulating coating in the groove part is obtained using the following method.

Similarly to the method of observing the groove part, after ion milling processing is performed, a cross section parallel to the rolling direction and the sheet thickness direction of the steel sheet is observed with a scanning electron microscope at a magnification of 1000 times, and the proportion of the portion not covered with the insulating coating in the surface (side surface and bottom surface) in the groove part is calculated. However, since the effect of the insulating coating cannot be obtained in a portion where the insulating coating is less than 1.0 µm, it is determined that the insulating coating is not formed. In addition, it is also determined that a portion where the thickness of the intermediate layer is less than 0.1 µm or more than 9.0 µm is not covered since adhesion of the insulating coating cannot be obtained. By subtracting the proportion (%) of the portion not covered with the insulating coating from 100 (%), the proportion (coverage) of the portion covered with the insulating coating is obtained.

Also in calculation of the coverage, three or more groove parts are observed, and an average value of respective measurement values is adopted.

### <Manufacturing Method>

According to a manufacturing method satisfying manufacturing conditions described below, the grain-oriented electrical steel sheet according to the present embodiment can be suitably manufactured. Note that, as a matter of course, the grain-oriented electrical steel sheet according to the present embodiment is not particularly limited in its manufacturing method. That is, a grain-oriented electrical steel sheet having the above-described configuration is regarded as the grain-oriented electrical steel sheet according to the present embodiment regardless of manufacturing conditions therefor.

The grain-oriented electrical steel sheet according to the present embodiment includes:
(I) a hot rolling step of hot-rolling a steel piece having a predetermined chemical composition to obtain a hot rolled sheet;
(II) a hot rolled sheet annealing step of annealing the hot rolled sheet;
(III) a cold rolling step of cold-rolling the hot rolled sheet after the hot rolled sheet annealing to obtain a cold rolled sheet;
(IV) a decarburization annealing step of performing decarburization annealing on the cold rolled sheet;
(V) a finishing annealing step of applying an annealing separator containing 10 to 100 mass% of Al₂O₃ to the cold rolled sheet after the decarburization annealing step, drying the annealing separator, and then performing finishing annealing;
(VI) an annealing separator removal step of removing the excess of the annealing separator from the steel sheet after the finishing annealing step;
(VII) a groove-forming step of forming a groove part extending in a direction of 45 to 135° with respect to a rolling direction on the steel sheet before the finishing annealing step or after the annealing separator removal step by processing using a blade-like or a laser;
(VIII) an intermediate layer-forming step of immersing the steel sheet, which has undergone the annealing separator removal step and the groove-forming step, for 5 to 90 seconds in a mixed treatment liquid at a liquid temperature of 30 to 85°C, where the mixed treatment liquid contains a metal phosphate having a concentration of 1.0 to 15.0 mass%, one or two or more acids selected from hydrofluoric acid, nitric acid, and phosphoric acid having a total concentration of 0.01 to 10.0 mass%, and sodium hydroxide, sodium carbonate, or sodium phosphate having a concentration of 0.01 to 1.50 mass%, washing and removing the mixed treatment liquid with water, and then drying the steel sheet; and
(IX) a tension coating layer-forming step of applying a coating liquid containing a metal phosphate and colloidal silica such that the colloidal silica is contained in an amount of 30 to 150 parts by mass with respect to 100 parts by mass of the metal phosphate to the steel sheet after the intermediate layer-forming step, drying the coating liquid, and then holding the steel sheet at a sheet temperature of 700 to 950°C for 10 to 90 seconds.

Further, the method for manufacturing a grain-oriented electrical steel sheet according to the present embodiment may further include:
(X) a nitriding treatment step of subjecting the cold rolled sheet to nitriding treatment between the decarburization annealing step and the finishing annealing step.

Among them, the manufacturing of the grain-oriented electrical steel sheet according to the present embodiment is characterized by the steps of (V) the finishing annealing step to (IX) the tension coating layer-forming step (method for forming insulating coating) mainly related to the formation of the insulating coating, and other steps or conditions not described can adopt known conditions.

Hereinafter, these steps will be described.

### <Hot Rolling Step>

In the hot rolling step, a steel piece having a predetermined chemical composition, such as a slab, is heated and then hot-rolled to obtain a hot rolled sheet. The heating temperature of the steel piece is preferably in a range of 1100 to 1450°C. The heating temperature is more preferably 1300 to 1400°C.

The chemical composition of the steel piece may be changed according to a chemical composition of a base steel sheet of a grain-oriented electrical steel sheet to be finally obtained, but examples thereof include a chemical composition containing, in mass%, C: 0.01 to 0.20%, Si: 2.50 to 4.00%, sol. Al: 0.01 to 0.040%, Mn: 0.01 to 0.50%, N: 0.020% or less, S: 0.005 to 0.040%, Cu: 0 to 0.50%, Sn: 0 to 0.50%, Se: 0 to 0.020%, and Sb: 0 to 0.50%, with the remainder of Fe and impurities.

The hot rolling conditions are not particularly limited, and are appropriately set according to required characteristics. The sheet thickness of the hot rolled sheet is preferably, for example, in a range of 2.0 mm or more and 3.0 mm or less.

### <Hot Rolled Sheet Annealing Step>

The hot rolled sheet annealing step is a step of annealing the hot rolled sheet manufactured through the hot rolling step. By performing such an annealing treatment, recrystallization occurs in the metallographic structure, and favorable magnetic characteristics can be preferably achieved.

When the hot rolled sheet annealing is performed, the hot rolled sheet manufactured through the hot rolling step may be annealed according to a known method. The means for heating the hot rolled sheet at the time of annealing is not particularly limited, and a known heating method can be adopted. The annealing conditions are not particularly limited. For example, the hot rolled sheet can be annealed in a temperature range of 900 to 1200°C for 10 seconds to 5 minutes.

### <Cold Rolling Step>

In the cold rolling step, the hot rolled sheet after the hot rolled sheet annealing step is subjected to cold rolling to obtain a cold rolled sheet. The cold rolling may be performed one time, or before the final pass of the cold rolling step, the cold rolling may be interrupted, and at least one or two times of intermediate annealing may be performed to perform a plurality of times of cold rolling to interpose the intermediate annealing.

When the intermediate annealing is performed, it is preferable to hold the hot rolled sheet at a temperature of 1000 to 1200°C for 5 to 180 seconds. The annealing atmosphere is not particularly limited. The number of times of intermediate annealing is preferably 3 or less in consideration of manufacturing cost.

In addition, before the cold rolling step, the surface of the hot rolled sheet may be subjected to pickling.

In the cold rolling step according to the present embodiment, the hot rolled sheet may be subjected to cold rolling according to a known method to obtain a cold rolled sheet. For example, the final rolling reduction can be in a range of 80 to 95%. When the final rolling reduction is 80% or more, a Goss nucleus in which the {110}<001> orientation has a high development degree in a rolling direction can be obtained, which is preferable. On the other hand, when the final rolling reduction exceeds 95%, there is a high possibility that secondary recrystallization is unstable in the subsequent finishing annealing step, which is not preferable.

The final rolling reduction is a cumulative rolling reduction of cold rolling, and when intermediate annealing is performed, the final rolling reduction is a cumulative rolling reduction of cold rolling after the final intermediate annealing.

### <Decarburization Annealing Step>

In the decarburization annealing step, the obtained cold rolled sheet is subjected to decarburization annealing. In the decarburization annealing, decarburization annealing conditions are not limited as long as the cold rolled sheet can be primarily recrystallized and C that adversely affects magnetic characteristics can be removed from the steel sheet, but for example, the cold rolled sheet is held at an annealing temperature of 800 to 900°C for 10 to 600 seconds with a degree of oxidation (PH₂O/PH₂) of 0.3 to 0.6 in an annealing atmosphere (furnace atmosphere).

### <Nitriding Treatment Step>

A nitriding treatment may be performed between the decarburization annealing step and the finishing annealing step that will be described later.

In the nitriding treatment step, for example, the steel sheet after the decarburization annealing step is maintained at about 700 to 850°C in a nitriding treatment atmosphere (an atmosphere containing a gas having nitriding ability, such as hydrogen, nitrogen, or ammonia) to perform the nitriding treatment. When AlN is utilized as an inhibitor, a nitrogen concentration of the steel sheet is preferably set to 40 ppm or more through the nitriding treatment. On the other hand, when the nitrogen concentration of the steel sheet exceeds 1000 ppm, AlN is excessively present in the steel sheet even after completion of secondary recrystallization in the finishing annealing. Such AlN causes iron loss deterioration. Therefore, the nitrogen concentration of the steel sheet after the nitriding treatment step is preferably set to 1000 ppm or less.

### <Finishing annealing Step>

In the finishing annealing step, an annealing separator containing 10 to 100 mass% of Al₂O₃ is applied to the cold rolled sheet that has been subjected to the decarburization annealing step or further subjected to the nitriding treatment, and dried, and then finishing annealing is performed.

In a conventional manufacturing method of a grain-oriented electrical steel sheet, a forsterite film is formed on the surface of a steel sheet (cold rolled sheet) by applying an annealing separator mainly containing MgO and performing finishing annealing. In contrast, in the method for manufacturing the grain-oriented electrical steel sheet according to the present embodiment, an annealing separator containing Al₂O₁ is used so as not to form a forsterite film.

On the other hand, the percentage of Al₂O₃ may be 100 mass%, but, in the method for manufacturing the grain-oriented electrical steel sheet according to the present embodiment, the annealing separator preferably contains MgO from the viewpoint of preventing Al₂O₃ from burning into a sheet surface. MgO may be 0%, but the percentage of MgO is preferably set to 5 mass% or more when the above effect is to be obtained. When MgO is contained, the percentage of MgO is 90 mass% or less in order to secure 10 mass% or more of Al₂O₃. The percentage of MgO is preferably 50 mass% or less. Al₂O₃ and MgO may be more than 50 mass% in total in terms of solid content with respect to the annealing separator.

In addition, in the method for manufacturing the grain-oriented electrical steel sheet according to the present embodiment, the annealing separator may further contain a chloride. When the annealing separator contains a chloride, an effect that a forsterite film is hardly formed can be obtained. The content of the chloride is not particularly limited, and may be 0%, but is preferably 0.5 to 10 mass% when the above effect is to be obtained. As the chloride, for example, bismuth chloride, calcium chloride, cobalt chloride, iron chloride, and nickel chloride are effective.

Finishing annealing conditions are not limited, but for example, a condition of holding the steel sheet at a temperature of 1150 to 1250°C for 10 to 60 hours can be adopted.

### [Annealing Separator Removal Step]

In the annealing separator removal step, the excess of the annealing separator is removed from the steel sheet after the finishing annealing step. For example, the excess of the annealing separator can be removed by performing water washing.

### [Groove-Forming Step]

In the groove-forming step, a groove part extending in a direction of 45 to 135° with respect to the rolling direction is formed in the steel sheet by processing using a blade-like or a laser. The groove-forming step may be performed after the decarburization annealing step and before the finishing annealing step, or may be performed after the annealing separator removal step.

In the case of forming the groove part by processing using the blade-like, the groove part may be formed according to a method based on physical contact, and conditions may be set as appropriate such that a predetermined extending direction, depth, and width are obtained, and a groove may be physically formed.

When irradiation with the laser is used, for example, a high-power laser generally used for industrial use such as a fiber laser, a YAG laser, a semiconductor laser, or a CO₂ laser may be used. The output type may be a pulsed laser or a continuous wave laser. In order to form a groove having a predetermined shape, it is preferable to set the laser power to 200 to 3000 W, a focused spot diameter (diameter including 86% of the laser power) of a laser beam in the rolling direction to 10 to 1000 µm, a condensed spot diameter in the sheet width direction to 10 to 1000 µm, and a laser scanning speed to 5 to 100 m/s. Examples of a method for removing a melt from the surface include spraying of an assist gas, and for example, air, CO₂, argon, or the like is sprayed to an irradiation unit simultaneously with laser irradiation, and a suction unit is provided in the vicinity thereof, so that reattachment of the melt to the sheet surface can be reduced.

In terms of reliability, processing using a blade-like is preferable.

### [Intermediate Layer-Forming Step]

In the intermediate layer-forming step, the steel sheet, which has undergone the annealing separator removal step and the groove-forming step, is immersed for 5 to 90 seconds in a mixed treatment liquid at a liquid temperature of 30 to 85°C, where the mixed treatment liquid contains a metal phosphate having a concentration of 1.0 to 15.0 mass%, one or two or more acids selected from hydrofluoric acid, nitric acid, and phosphoric acid having a total concentration of 0.01 to 10.0 mass%, and sodium hydroxide, sodium carbonate, or sodium phosphate having a concentration of 0.01 to 1.50 mass%, and is pulled up, the mixed treatment liquid is washed with water and removed, and the steel sheet is dried. As a result, an intermediate layer containing a crystalline metal phosphate and having a thickness of 0.1 to 15.0 µm is formed on the surface of the base steel sheet. The intermediate layer is formed not only in the flat surface part but also in the groove part. In the inside of the groove, the supply of phosphoric acid and metal, which are substances constituting the intermediate layer, tends to be insufficient compared with the flat surface part. In addition, in the groove part, hydrogen generated with the formation of the intermediate layer is likely to adhere to the surface, which is disadvantageous for the formation of the intermediate layer. Therefore, the thickness of the intermediate layer is 0.1 to 9.0 µm under the above-described conditions.

When the liquid temperature is less than 30°C or the immersion time is less than five seconds, an intermediate layer having a sufficient thickness cannot be obtained. On the other hand, when the liquid temperature is higher than 85°C or the immersion time is longer than 90 seconds, the thickness of the intermediate layer is excessive.

The mixed treatment liquid is a treatment liquid containing a metal phosphate having a concentration of 1.0 to 15.0 mass%, one or two or more acids (additional acids) selected from hydrofluoric acid, nitric acid, and phosphoric acid having a total concentration of 0.01 to 10.0 mass%, and sodium hydroxide, sodium carbonate, or sodium phosphate (pH-adjusting agent) having a concentration of 0.01 to 1.50 mass%. By using such a treatment liquid, wettability between the treatment liquid and the surface of the base steel sheet (the flat surface part and the groove part) is enhanced, and adhesion of the intermediate layer is enhanced. In particular, as described above, the intermediate layer is less likely to be formed in the groove part compared with the flat surface part, but in the present embodiment, the formation of the intermediate layer in the groove part can be promoted using a treatment liquid containing one or more of hydrofluoric acid, nitric acid, and phosphoric acid as an oxidizing agent for oxidizing hydrogen while increasing the concentration of the metal phosphate.

When the mixed treatment liquid does not contain one or two or more acids selected from hydrofluoric acid, nitric acid, and phosphoric acid, the above effect cannot be obtained. When the above effect is to be obtained, the content of one or two or more acids selected from hydrofluoric acid, nitric acid, and phosphoric acid in the treatment liquid is 0.01 mass% or more.

On the other hand, when the proportion of one or two or more acids selected from hydrofluoric acid, nitric acid, and phosphoric acid is too high in the treatment liquid, formation of the intermediate layer of the flat surface part may be curbed. Therefore, in the treatment liquid, the content of one or two or more acids selected from hydrofluoric acid, nitric acid, and phosphoric acid is 10.0 mass% or less. Among hydrofluoric acid, nitric acid, and phosphoric acid, hydrofluoric acid is preferable from the viewpoint of accelerating formation of the intermediate layer in the groove part.

When the metal phosphate of the treatment liquid is less than 1.0 mass%, formation of the intermediate layer in the groove part is delayed. On the other hand, when the metal phosphate is more than 15.0 mass%, the intermediate layer of the flat surface part becomes too thick. Therefore, the metal phosphate in the treatment liquid is 1.0 to 15.0 mass%. The metal phosphate contained in the treatment liquid is preferably one or two or more of zinc phosphate, manganese phosphate, and zinc calcium phosphate.

In addition, when the concentration of the metal phosphate is low, it takes time to form the intermediate layer and the dissolution of the steel sheet increases, so that the intermediate layer becomes porous, and when the concentration of the metal phosphate is high, the intermediate layer is quickly formed, so that the intermediate layer is formed of coarse crystals and has severe irregularities.

In addition, when the concentration of the sodium hydroxide, the sodium carbonate, or the sodium phosphate, which is a pH-adjusting agent, is low, the acidity increases and the corrosion resistance decreases, and when the concentration is high, the treatment liquid becomes unstable. The use of sodium hydroxide, sodium carbonate, or sodium phosphate as the pH-adjusting agent is not only advantageous in terms of cost, but also because the stability of the treatment liquid is higher.

The treatment liquid may further contain a sludge inhibitor such as a chelate as necessary.

### [Tension Coating Layer-Forming Step]

In the tension coating layer-forming step, a coating liquid containing a metal phosphate and colloidal silica such that the colloidal silica is contained in an amount of 30 to 150 parts by mass with respect to 100 parts by mass of the metal phosphate is applied to the steel sheet after the intermediate layer-forming step, dried, and then held (baked) for 10 to 90 seconds at a sheet temperature of 700 to 950°C. Thus, a tension coating is formed. The layer formed of the tension coating (tension coating layer) and the intermediate layer serves as an insulating coating.

When the sheet temperature is lower than 700°C, the tension is low and magnetic characteristics are poor. Therefore, the sheet temperature is preferably set to 700°C or higher. On the other hand, when the sheet temperature is higher than 950°C, rigidity of the steel sheet decreases and the steel sheet is easily deformed. In this case, the steel sheet may be distorted due to transfer or the like, resulting in poor magnetic characteristics. Therefore, the sheet temperature is preferably set to 950°C or lower.

When the holding time is less than 10 seconds, the dissolution property is poor. Therefore, the holding time is set to 10 seconds or more. On the other hand, when the holding time is more than 90 seconds, the adhesion deteriorates, or the productivity deteriorates when trying to avoid deterioration in adhesion. Therefore, the holding time is preferably 90 seconds or less.

The coating liquid contains a metal phosphate and colloidal silica such that the colloidal silica is contained in an amount of 30 to 150 parts by mass with respect to 100 parts by mass of the metal phosphate. The total of the metal phosphate and the colloidal silica may be more than 50 mass% in terms of solid content with respect to the coating liquid. As the metal phosphate, for example, one or a mixture of two or more substances selected from aluminum phosphate, zinc phosphate, magnesium phosphate, nickel phosphate, copper phosphate, lithium phosphate, and cobalt phosphate may be used.

The coating liquid may contain vanadium, tungsten, molybdenum, zirconium, and the like as additional elements.

As the colloidal silica, S-type or C-type colloidal silica may be used. The S-type colloidal silica means colloidal silica in which the silica solution is alkaline, and the C-type colloidal silica means colloidal silica in which the silica particle surface is subjected to an aluminum treatment, and the silica solution is alkaline to neutral. The S-type colloidal silica is widely and generally used, and is relatively inexpensive in price, but it is necessary to be careful because the S-type colloidal silica may aggregate and precipitate when being mixed with an acidic metal phosphate solution. The C-type colloidal silica is stable even when being mixed with a metal phosphate solution, and there is no possibility of precipitation, but the C-type colloidal silica is relatively expensive because the number of treatment steps is large. It is preferable to select and use them according to the stability of a coating liquid to be prepared.

### Examples

A slab containing, in mass%, C: 0.08%, Si: 3.31%, sol. Al: 0.028% N: 0.008%, Mn: 0.07%, and S: less than 0.0005%, with the remainder of Fe and impurities, was cast.

This slab was heated to 1350°C and then hot-rolled to form a hot rolled sheet having a sheet thickness of 2.2 mm.

This hot rolled sheet was annealed (hot rolled sheet annealing) at 1100°C for 10 seconds, and then cold-rolled until the sheet thickness became 0.22 mm to obtain a cold rolled sheet.

This cold rolled sheet was subjected to decarburization annealing at 830°C for 90 seconds in an atmosphere with (PH₂O/PH₂) of 0.4.

Thereafter, except for No. 109, an annealing separator containing 50 mass% of Al₂O₃, 46.5 mass% of MgO, and 3.5 mass% of BiCl₃ as a bismuth chloride was applied to the cold rolled sheet, dried, and then subjected to finishing annealing at 1200°C for 20 hours. For No. 109, an annealing separator containing only Al₂O₃ (100 mass%) was applied to the cold rolled sheet and dried, and then finishing annealing was performed at 1200°C for 20 hours.

When the steel sheet after the finishing annealing step was washed with water to remove the excess of the annealing separator, no forsterite film was formed on the sheet surface.

With respect to this steel sheet, a plurality of groove parts having a width of 50 µm and a depth of 20 µm extending in a orthogonal direction (direction of 82° with respect to the rolling direction) to the rolling direction were formed at a pitch of 6.0 mm in the rolling direction by processing using the blade-like.

The steel sheet was immersed in a treatment liquid shown in Table 1, and then heated and dried to form an intermediate layer. The average thickness of the intermediate layer was as shown in Table 1.

As a result of X-ray crystallography, all the metal phosphates were crystalline metal phosphates, and the proportion of the crystalline metal phosphates in the intermediate layer was 80 mass% or more.

**[Table 1]**

| Intermediate Layer No. | Treatment Liquid | | | | | | Treatment Conditions | | Intermediate Layer | | |
|---|---|---|---|---|---|---|---|---|---|---|---|
| | Metal Phosphate | | Additional Acid | | pH-Adjusting Agent | | | | | | |
| | Type | Concentration (mass%) | Type | Concentration (mass%) | Type | Concentration (mass%) | Treatment Liquid Temperature (°C) | Immersion Time (sec) | Metal Phosphate Detected in 5 mass% or more | Average Thickness of Flat surface part (µm) | Average Thickness of Groove Part (µm) |
| 1 | Zinc Phosphate | 9.0 | Hydrofluoric Acid | 0.1 | Sodium Hydroxide | 0.02 | 40 | 60 | Zinc Phosphate | 9.0 | 3.0 |
| 2 | Zinc Phosphate | 5.0 | Hydrofluoric Acid | 0.1 | Sodium Hydroxide | 0.03 | 30 | 80 | Zinc Phosphate | 8.0 | 2.0 |
| 3 | Manganese Phosphate | 5.5 | Nitric Acid | 1.1 | Sodium Carbonate | 0.20 | 80 | 10 | Manganese Phosphate | 13.0 | 6.0 |
| 4 | Manganese Phosphate | 12.5 | Phosphoric Acid | 8.0 | Sodium Hydroxide | 0.40 | 80 | 5 | Manganese Phosphate + Iron Phosphate | 3.0 | 0.5 |
| 5 | Calcium Phosphate | 7.0 | Nitric Acid | 4.0 | Sodium Phosphate | 0.60 | 80 | 12 | Zinc Calcium Phosphate | 5.0 | 1.5 |
| 6 | Zinc Phosphate | 5.0 | - | - | Sodium Phosphate | 0.80 | 40 | 90 | Zinc Phosphate | 1.5 | 0.1 |
| 7 | Manganese Phosphate | 5.5 | - | - | Sodium Phosphate | 1.20 | 60 | 40 | Manganese Phosphate | 2.5 | 0.1 |
| 8 | Zinc Phosphate | 5.5 | Hydrofluoric Acid | 0.0 | Sodium Hydroxide | 0.02 | 50 | 90 | Zinc Phosphate | 0.0 | 1.5 |
| 9 | Manganese Phosphate | 5.0 | Nitric Acid | 12.0 | Sodium Phosphate | 1.50 | 85 | 20 | Manganese Phosphate | 2.5 | 0.0 |
| 10 | Zinc Phosphate | 0.5 | Hydrofluoric Acid | 0.1 | Sodium Hydroxide | 0.02 | 50 | 90 | Zinc Phosphate | 1.5 | 0.0 |
| 11 | Zinc Phosphate | 20.0 | Hydrofluoric Acid | 0.1 | Sodium Hydroxide | 0.02 | 30 | 30 | Zinc Phosphate | 17.0 | 16.0 |
| 12 | Zinc Phosphate | 9.0 | Hydrofluoric Acid | 0.1 | Sodium Hydroxide | 0.02 | 40 | 4 | Zinc Phosphate | 0.0 | 0.0 |
| 13 | Zinc Phosphate | 5.0 | Hydrofluoric Acid | 0.1 | Sodium Hydroxide | 0.02 | 30 | 120 | Zinc Phosphate | 12.0 | 16.0 |
| 14 | Manganese Phosphate | 5.5 | Hydrochloric Acid | 5.0 | Sodium Hydroxide | 1.50 | 40 | 90 | Manganese Phosphate | 0.5 | 0.0 |
| 15 | Manganese Phosphate | 5.5 | Phosphoric Acid | 5.0 | Sodium Hydroxide | 5.50 | 80 | 5 | Manganese Phosphate + Iron Phosphate | 0.5 | 0.0 |
| 16 | Zinc Phosphate | 5.0 | Hydrofluoric Acid | 0.1 | - | - | 40 | 60 | Zinc Phosphate | 0.7 | 0.0 |

A steel sheet on which any one of the intermediate layers of Nos. 1 to 16 was formed, and if necessary, the steel sheet was cut into a plurality of pieces, a coating liquid containing a metal phosphate and colloidal silica shown in Table 2 was applied to each steel sheet, and the steel sheet was baked in a drying furnace for the time shown in Table 2 up to a sheet temperature in Table 2, thereby forming a tension coating on the surface. In the case where vanadium, tungsten, molybdenum, or zirconium was contained in the coating liquid, vanadium, tungsten, molybdenum, or zirconium was added as an oxygen acid (V₂O₄, WO₃, MoO₃, or ZrO₂) in a molar ratio shown in Table 2. In the formation, the thickness of the tension coating layer was changed by changing the application amount of the coating liquid. Some of the coating liquids contained alumina or silicon nitride as the remainder.

Thereby, samples (grain-oriented electrical steel sheet) Nos. 101 to 121 were manufactured.

For these steel sheets, the average thickness of the insulating coatings was obtained using the method described above.

Table 2 shows the results.

**[Table 2]**

| Sample No. | Intermediate Layer No. | Tension Coating Layer Forming Conditions | | | | Tension Coating Layer | Insulating Coating | | |
|---|---|---|---|---|---|---|---|---|---|
| | | Treatment Liquid | | Holding Conditions | | Silica Content | Groove Part Coverage | Average Thickness of Flat surface part | Average Thickness of Groove Part |
| | | Metal Phosphate (100 parts by mass) | Colloidal Silica (parts by mass) | Sheet Temperature (°C) | Time (sec) | (mass%) | (area%) | (µm) | (*µm*) |
| 101 | 1 | Aluminum Phosphate | 60 | 900 | 30 | 38 | 100 | 12.5 | 3.7 |
| 102 | 2 | Aluminum/Zinc Phosphate | 50 | 850 | 60 | 33 | 100 | 11.5 | 2.7 |
| 103 | 3 | Aluminum/Manganese Phosphate | 60 | 875 | 30 | 38 | 75 | 16.5 | 6.5 |
| 104 | 4 | Aluminum/Vanadium Phosphate | 80 | 875 | 30 | 44 | 90 | 6.5 | 1.1 |
| 105 | 5 | Aluminum/Tungsten Phosphate | 80 | 875 | 30 | 44 | 60 | 8.5 | 1.9 |
| 106 | 1 | Aluminum/Zinc Phosphate | 50 | 850 | 60 | 33 | 100 | 12.5 | 3.7 |
| 107 | 2 | Aluminum Phosphate | 60 | 900 | 30 | 38 | 80 | 11.5 | 2.6 |
| 108 | 3 | Aluminum Phosphate | 60 | 900 | 30 | 38 | 70 | 16.5 | 6.5 |
| 109 | 4 | Aluminum Phosphate | 60 | 900 | 30 | 38 | 90 | 6.5 | 1.1 |
| 110 | 5 | Aluminum/Vanadium Phosphate | 80 | 875 | 30 | 44 | 70 | 8.5 | 2.0 |
| 111 | 6 | Aluminum Phosphate | 60 | 900 | 30 | 38 | 40 | 5.0 | 0.3 |
| 112 | 7 | Aluminum Phosphate | 60 | 900 | 30 | 38 | 30 | 6.0 | 0.3 |
| 113 | 8 | Aluminum Phosphate | 60 | 900 | 30 | 38 | 30 | 3.5 | 1.7 |
| 114 | 9 | Aluminum/Zinc Phosphate | 50 | 850 | 60 | 33 | 40 | 6.0 | 0.3 |
| 115 | 10 | Aluminum/Zinc Phosphate | 50 | 850 | 60 | 33 | 20 | 5.0 | 0.2 |
| 116 | 11 | Aluminum/Zinc Phosphate | 50 | 850 | 60 | 33 | 10 | 20.5 | 16.1 |
| 117 | 12 | Aluminum Phosphate | 60 | 900 | 30 | 38 | 15 | 3.6 | 0.1 |
| 118 | 13 | Aluminum Phosphate | 60 | 900 | 30 | 38 | 30 | 15.5 | 16.2 |
| 119 | 14 | Aluminum Phosphate | 60 | 900 | 30 | 38 | 15 | 4.0 | 0.1 |
| 120 | 15 | Aluminum Phosphate | 60 | 900 | 30 | 38 | 10 | 3.5 | 0.1 |
| 121 | 16 | Aluminum/Zinc Phosphate | 60 | 850 | 30 | 38 | 25 | 5.4 | 0.6 |

As a result of obtaining the chemical composition of the base steel sheet according to the above method, C: 0.002%, Si: 3.31%, sol. Al: less than 0.001%, N: 0.001%, Mn: 0.07%, and S: less than 0.0005% were contained, and the remainder was Fe and impurities.

For these steel sheets, adhesion, coating tension, corrosion resistance, dissolution property, and magnetic characteristics of an insulating coating were obtained using methods that will be described later. The results thereof are shown in Table 3.

### [Adhesion]

The adhesion of the coating was evaluated by the degree of peeling (area ratio) of the coating of the entire sample including the groove part and the flat surface part after a bending adhesion test was performed in which a sample having a width of 30 mm and a length of 300 mm was taken from the steel sheet, the sample was subjected to stress relief annealing at 850°C for 2 hours in a nitrogen stream, and then wound around a 10 mmφ cylinder and unwound.

The evaluation criteria were as follows, and in the case of A or B, it was determined that the coating adhesion was excellent.
A: Peeling area ratio of 0 to 0.5%
B: Peeling area ratio of more than 0.5% and 5.0% or less
C: Peeling area ratio of more than 5.0% and 20% or less
D: Peeling area ratio of more than 20% and 50% or less
E: Peeling area ratio of more than 50%

### [Coating Tension]

Coating tension was calculated by collecting a sample from a steel sheet and counting backward from a bending state when an insulating coating on one surface of the sample was peeled off.

When the obtained coating tension was 4.0 MPa or more, it was determined that the coating tension was excellent.

### [Corrosion Resistance]

In accordance with a salt spray test of JIS Z2371:2015, a 5%NaCl aqueous solution was naturally dropped to a sample for seven hours in an atmosphere of 35°C.

Thereafter, a rusting area was evaluated at 10 points.

Evaluation criteria were as follows, and a score of 5 or more (5 to 10) was determined to have excellent corrosion resistance.
10: No rust was generated
9: Rust was generated in an extremely small amount (area ratio was 0.10% or less)
8: Rust was generated in an area ratio of more than 0.10% and 0.25% or less
7: Rust was generated in an area ratio of more than 0.25% and 0.50% or less
6: Rust was generated in an area ratio of more than 0.50% and 1.0% or less
5: Rust was generated in an area ratio of more than 1.0% and 2.5% or less
4: Rust was generated in an area ratio of more than 2.5% and 5.0% or less
3: Rust was generated in an area ratio of more than 5.0% and 10% or less
2: Rust was generated in an area ratio of more than 10% and 25% or less
1: Rust was generated in an area ratio of more than 25% and 50% or less

### [Dissolution Property]

A sample was collected from the obtained steel sheet, the sample was boiled in pure water for 10 minutes, and the amount of phosphoric acid eluted in the pure water was measured. By dividing the amount of the eluted phosphoric acid by the area of the insulating coating of the boiled grain-oriented electrical steel sheet, the dissolution property (mg/m²) was evaluated.

The amount of phosphoric acid eluted in the pure water was calculated by cooling the pure water (solution) in which phosphoric acid was eluted, diluting the cooled solution with pure water, and measuring the phosphoric acid concentration of the sample using ICP-AES.

When the dissolution amount per unit area was less than 40 mg/m², it was determined that the dissolution property was excellent.

### [Magnetic Characteristics]

B8 (magnetic flux density at a magnetizing force of 800 A/m) and W17/50 (iron loss per mass at an amplitude of a magnetic flux density of 1.7 T and 50 Hz) were measured as magnetic characteristics after applying stress relief annealing at 850°C for 2 hours in a nitrogen stream.

These characteristic values were measured using a single sheet tester (SST) in accordance with JIS C2556.

**[Table 3]**

| Sample No. | Coating Adhesion | Coating Tension | Corrosion Resistance | Dissolution Property | Iron Loss (W17/50) | Remarks |
|---|---|---|---|---|---|---|
| | | MPa | | mg/m² | W/kg | |
| 101 | A | 7.9 | 8 | 28 | 0.71 | Invention Example |
| 102 | A | 7.2 | 9 | 21 | 0.73 | Invention Example |
| 103 | B | 8.9 | 7 | 20 | 0.72 | Invention Example |
| 104 | B | 9.6 | 8 | 17 | 0.71 | Invention Example |
| 105 | B | 9.4 | 8 | 18 | 0.69 | Invention Example |
| 106 | B | 7.4 | 8 | 26 | 0.68 | Invention Example |
| 107 | B | 6.4 | 7 | 22 | 0.71 | Invention Example |
| 108 | B | 10.1 | 7 | 27 | 0.72 | Invention Example |
| 109 | B | 9.3 | 7 | 10 | 0.71 | Invention Example |
| 110 | A | 6.3 | 8 | 12 | 0.73 | Invention Example |
| 111 | C | 6.3 | 6 | 26 | 0.80 | Comparative Example |
| 112 | D | 5.1 | 3 | 27 | 0.81 | Comparative Example |
| 113 | C | 5.3 | 8 | 29 | 0.79 | Comparative Example |
| 114 | C | 4.3 | 6 | 46 | 0.82 | Comparative Example |
| 115 | C | 3.2 | 6 | 31 | 0.83 | Comparative Example |
| 116 | C | 2.1 | 4 | 36 | 0.81 | Comparative Example |
| 117 | D | 3.7 | 3 | 25 | 0.83 | Comparative Example |
| 118 | C | 5.8 | 7 | 45 | 0.78 | Comparative Example |
| 119 | D | 2.6 | 4 | 40 | 0.78 | Comparative Example |
| 120 | D | 2.1 | 3 | 42 | 0.82 | Comparative Example |
| 121 | C | 4.6 | 3 | 30 | 0.79 | Comparative Example |

As shown in Tables 1 to 3, in the invention examples, a predetermined groove part was formed in the base steel sheet by forming an insulating coating (intermediate layer and tension coating) on the surface of the base steel sheet under specific treatment conditions after forming a groove, and the coverage of the groove part with the predetermined insulating coating was 50 area% or more. As a result, the coating adhesion and the magnetic characteristics were excellent. In addition, the coating tension, the corrosion resistance, and the dissolution property were also sufficient.

On the other hand, in the comparative examples, the groove part was not sufficiently covered with the insulating coating, and the coating adhesion and/or the magnetic characteristics were poor.

### INDUSTRIAL APPLICABILITY

According to the present invention, it is possible to provide a grain-oriented electrical steel sheet having excellent coating adhesion and magnetic characteristics, and a method for forming an insulating coating included in the grain-oriented electrical steel sheet. Therefore, industrial applicability is high.

### REFERENCE SIGNS LIST

1 Grain-oriented electrical steel sheet
2 Flat surface part
3 Groove part
**11** Base steel sheet
21 Insulating coating
211 Intermediate layer
212 Tension coating layer
RD Rolling direction
TD Width direction
ND Sheet thickness direction
D Groove depth
W Groove width

## Claims

1. A grain-oriented electrical steel sheet, comprising:
a base steel sheet; and
an insulating coating formed on a surface of the base steel sheet, wherein
the base steel sheet includes:
a flat surface part, and
a groove part extending in a direction of 45 to 135° with respect to a rolling direction,
the groove part has a depth of 10 to 30 µm and a width of 10 to 200 µm,
the insulating coating includes:
an intermediate layer formed on a side of the base steel sheet, containing a crystalline metal phosphate, and having a thickness of 0.1 to 15.0 µm, and
a tension coating layer formed on a surface side of the insulating coating, and
the base steel sheet is covered with the insulating coating including the tension coating layer and the intermediate layer having a thickness of 0.1 to 9.0 µm in 50% or more of the groove part in terms of area ratio.

2. The grain-oriented electrical steel sheet according to claim 1, wherein
the crystalline metal phosphate contained in the intermediate layer is one or two or more of zinc phosphate, manganese phosphate, iron phosphate, and zinc calcium phosphate, and
the tension coating layer contains a metal phosphate and silica, and the content of silica in the tension coating layer is 20 to 60 mass%.

3. A method for forming the insulating coating included in the grain-oriented electrical steel sheet according to claim 1, the method comprising:
a finishing annealing step of applying an annealing separator containing 10 to 100 mass% of Al₂O₃ to a steel sheet, drying the annealing separator, and then performing finishing annealing;
an annealing separator removal step of removing the excess of the annealing separator from the steel sheet after the finishing annealing step;
a groove-forming step of forming a groove part extending in a direction of 45 to 135° with respect to a rolling direction on the steel sheet before the finishing annealing step or after the annealing separator removal step by processing using a blade-like or a laser;
an intermediate layer-forming step of immersing the steel sheet, which has undergone the annealing separator removal step and the groove-forming step, for 5 to 90 seconds in a mixed treatment liquid at a liquid temperature of 30 to 85°C, where the mixed treatment liquid contains a metal phosphate having a concentration of 1.0 to 15.0 mass%, one or two or more acids selected from hydrofluoric acid, nitric acid, and phosphoric acid having a total concentration of 0.01 to 10.0 mass%, and sodium hydroxide, sodium carbonate, or sodium phosphate having a concentration of 0.01 to 1.50 mass%, washing and removing the mixed treatment liquid with water, and then drying the steel sheet; and
a tension coating layer-forming step of applying a coating liquid containing a metal phosphate and colloidal silica such that the colloidal silica is contained in an amount of 30 to 150 parts by mass with respect to 100 parts by mass of the metal phosphate to the steel sheet after the intermediate layer-forming step, drying the coating liquid, and then holding the steel sheet at a sheet temperature of 700 to 950°C for 10 to 90 seconds.

4. The method for forming the insulating coating according to claim 3, wherein
the annealing separator further contains one or both of 5 to 90 mass% of MgO and 0.5 to 10.0 mass% of chloride.
